# EUROPÄISCHE PATENTSCHRIFT

(11) **EP 4 100 230 B1**
(45) Veröffentlichungstag und Bekanntmachung des Hinweises auf die Patenterteilung: **09.10.2024**
(21) Anmeldenummer: 21704718.2
(22) Anmeldetag: 03.02.2021
(51) Int. Cl.: B29C 49/54, B29C 49/48, B29C 49/02, B29L 31/46, B29L 31/00

(54) **BLASFORM ZUM STRECKBLASFORMEN VON KUNSTSTOFFBEHÄLTERN MIT GRIFFHALTERUNG UND KASSETTE HIERFÜR**
BLOW MOULD FOR STRETCH BLOW MOULDING OF PLASTIC CONTAINERS WITH HANDLE MOUNT AND CASSETTE FOR SAME
MOULE DE SOUFFLAGE POUR MOULAGE PAR ÉTIRAGE-SOUFFLAGE DE RÉCIPIENTS EN MATIÈRE PLASTIQUE À SUPPORT DE PRÉHENSION ET CASSETTE APPROPRIÉS

(30) Priorität: 05.02.2020 DE 102020102970
(43) Veröffentlichungstag der Anmeldung: 14.12.2022
(73) Patentinhaber: KHS GmbH, 44143 Dortmund (DE)
(72) Erfinder: AMARIGLIO, Stefan, 22145 Hamburg (DE)
(74) Vertreter: Greiche, Albert
(86) Internationale Anmeldenummer: PCT/EP2021/052477
(87) Internationale Veröffentlichungsnummer: WO 2021/156274

(56) Entgegenhaltungen:
- EP-B1- 1 169 231
- CN-A- 101 164 764
- US-A1- 2018 022 011

## Beschreibung

Die Erfindung betrifft eine Blasform zum Streckblasformen eines PET-Behälter mit Griffhalterung für einen darin einclipsbaren Griff sowie eine Kassette zum Einsatz in eine solche Blasform. Darüber hinaus betrifft die Erfindung ein Verfahren zur Herstellung eines PET-Behälter mit Griffhalterung für einen darin einclipsbaren Griff.

Es ist bekannt, insbesondere größere Kunststoffbehälter, die beispielsweise mit einer Flüssigkeit wie Saft, Wasser, Würzsauce oder dergleichen, gefüllt werden sollen, zur besseren Handhabung mit einem Griff zu versehen. Dabei existieren verschiedene Verfahren, um bei einem Kunststoffbehälter eine Griffmöglichkeit zu realisieren.

Beim Streckblasformen von Kunststoffbehältern aus einem thermoplastischen Kunststoff kann beispielsweise eine Grifföffnung erzeugt werden, indem das Wandmaterial der Flasche so verformt wird, dass es einen Griff bildet. In der EP 3272497 B1 ist beispielsweise ein Verfahren beschrieben, bei dem zwei in einer Ausnehmung einer Seitenwand einer Blasform angeordnete Einsätze wie Druckstempel radial in das Innere der Blasform und aufeinander zu bewegt werden können, um während des Streckblasvorgangs in dem weichen Kunststoffmaterial eine Öffnung zu schaffen, die als Griff fungieren kann. Bei dem in der EP 3112280 B1 beschriebenen Verfahren wird in ähnlicher Weise während des Streckblasens mittels in die Blasform vorschiebbarer Einsätze ein Teil des weichen Flaschenmaterials so geformt, dass daraus ein seitlicher Griff gebildet wird.

In der JP 2006-103003 A ist ein Verfahren beschrieben, bei dem ein separater Griff mittels eines seitlich durch eine Öffnung in einer Blasformwand einführbaren Greifarms in die Blasform eingeführt werden kann, um den Griff während des Streckblasens in die Flaschenwandung einzuformen. Ähnlich ist auch in der EP 3124202 A1 eine Blasform zur Herstellung von Kunststoffbehältern mit Griff offenbart, bei der ein separater Griff mittels zweier beweglicher Griffhalter durch eine Öffnung zwischen zwei Blasformhälften in die Blasform eingebracht werden kann, um diesen während eines Streckblasvorgangs an einen Kunststoffbehälter anformen zu können.

Zur Herstellung von Kunststoffbehältern mit Griff mittels Streckblasformens ist es darüber hinaus bekannt, während des Streckblasens in das Wandmaterial des Kunststoffbehälters Halterungen mit Hinterschneidungen und dergleichen einzuformen, in die nach dem Formen des Behälters ein externer Griff mit komplementär geformten Griffteilen eingeclipst werden kann. In der JPH 11314268 A ist beispielsweise eine Blasform mit einem Einsatz in deren seitlicher Wandung beschrieben. Der Einsatz steht in das innere der Blasform vor, um eine Mulde in einem durch Streckblasen geformten Kunststoffbehälter zu erzeugen, und weist Hebel mit Vorsprüngen auf, die durch Öffnungen in dem vorspringenden Teil des Einsatzes in vertikaler Richtung in das Innere der Blasform in Richtung des Kunststoffbehälters vorgeschoben werden können, um in dem noch weichen Kunststoffmaterial Hinterschneidungen zu erzeugen, in die später ein Griff eingeclipst werden kann. In der WO 95/15250 ist eine Blasform mit einem in das Forminnere vorspringenden Bereich der Seitenwandung offenbart, wobei durch Öffnungen in der Seitenwandung in diesem Bereich Dorne in vertikaler Richtung vorgeschoben werden können, um in einem noch nicht ausgehärteten Kunststoffbehälter Hinterschneidungen zum späteren Anbringen eines Griffs auszubilden.

Weiter sind aus CN 101 164 764 A eine blasgeformte Flasche mit Griff und ihre Produktionsausrüstung bekannt. Die Befestigungsfestigkeit des Griffs ist erhöht, und der Griff lässt sich nicht leicht vom Flaschenkörper trennen. Dabei beschreibt CN 101 164 764 A, dass beim Blasformverfahren zwei Zylinder eingesetzt werden, die zum Antrieb von zwei Nocken verwendet werden können, und dass die beiden Nocken zum Formen von oberen und unteren Bodenschalen verwendet werden können, so dass die Wirkung der unteren Nockenseite vorne und die Wirkung der oberen Nockenseite hinten ist, die Schalentiefe und die Form der unteren Bodenseitenschale identisch mit der der oberen Bodenseitenschale sind, die Kombinationsabschnitte des Griffs fest in den oben erwähnten oberen und unteren Bodenseitenschalen kombiniert werden können, daher die Montagefestigkeit des Griffs erhöht werden kann und der Griff nicht leicht von dem Flaschenkörper getrennt werden kann.

EP 1 169 231 B1 betrifft einen Kunststoffbehälter, der sich aus einem Zwischenbehälter ergibt, der mindestens einen Teil umfasst, der so vorgeformt ist, dass er mechanisch verformbar ist und nach seiner Verformung eine Hohlprägung bildet. Vorzugsweise umfasst der Behälter zwei gegenüberliegende hohle Ausformungen, die einen Griff bilden. Insbesondere umfasst ein verformbarer Teil einen zentralen Hauptbereich, der von einem gelenkigen Randbereich umschlossen ist und durch Druck auf den zentralen Bereich verformt werden kann, um den zentralen Bereich zu verschieben oder ihn weiter in das Innere des Behälters einzudringen.

US 2018/022011 A1 beschreibt eine Formeinheit zum Formen eines Behälters, der mit einer hohlen Aussparung versehen ist, umfassend: eine Form, die mit einer Seitenwand versehen ist, die einen Hohlraum definiert, und die mit einer Tasche versehen ist, die in den Hohlraum mündet; eine Schachtelvorrichtung, umfassend: einen Einsatz, der in der Tasche in Bezug auf die Seitenwand verschiebbar angebracht und mit mindestens einem Durchgang versehen ist, der nach außen führt ein mit dem Einsatz fest verbundenes Betätigungselement, das mit einem Kolben versehen ist, der in einer in der Wand der Form gebildeten Kammer angebracht ist, wobei der Kolben die Kammer in eine hintere Halbkammer, die mit einer primären Fluidleitung in Verbindung steht, und eine vordere Halbkammer unterteilt, die einerseits mit einer sekundären Fluidleitung und andererseits mit der Tasche in Verbindung steht.

Die vorliegende Erfindung macht sich zur Aufgabe, die Herstellung von Kunststoffbehältern mit nach dem Streckblasformen einclipsbarem Griff zu verbessern. Insbesondere ist es Aufgabe der Erfindung, Mittel bereitzustellen, die die Herstellung solcher Kunststoffbehälter weniger störanfällig und wartungsfreundlicher machen, um längere Produktionsausfälle zu vermeiden.

Gelöst wird die Aufgabe in einem ersten Aspekt durch eine Kassette zum Einsatz in eine Öffnung einer Wandung eines Blasformteils einer Blasform zum Streckblasformen eines PET-Behälter mit Griffhalterung für einen nach dem Streckblasformen einclipsbaren Griff, wobei die Griffhalterung mindestens eine Hinterschneidung in dem Kunststoffhohlkörper zur Aufnahme eines komplementär ausgebildeten Griffelements umfasst, und wobei die Kassette folgendes umfasst:
- ein Kassettengehäuse
- mindestens ein innerhalb des Kassettengehäuses angeordnetes und durch eine Öffnung in dem Kassettengehäuse aus dem Kassettengehäuse vor- und in das Kassettengehäuse rückführbares Formungselement zur Formung der mindestens einen Hinterschneidung in thermoplastisch verformbarem Wandmaterial eines PET-Behälter, und
- mindestens ein innerhalb des Kassettengehäuses angeordneter und mit dem mindestens einen Formungselement mechanisch gekoppelter Fluidzylinder,
wobei das mindestens eine Formungselement mittels des Fluidzylinders zumindest teilweise aus dem Kassettengehäuse vor- und in das Kassettengehäuse rückführbar ist.

Unter einer "Kassette" wird hier ein Behälter verstanden, der vorzugsweise allseitig geschlossen ist. Der Begriff "allseitig geschlossen" bedeutet, dass seitliche, obere und untere sowie vordere und rückseitige Behälterwandungen vorhanden sind, die einen Behälterinnenraum einschließen, schließt jedoch nicht aus, dass in einer oder mehreren Wandungen eine oder mehrere Öffnungen vorhanden sein können. Der Begriff "Kassettenmodul" wird hier gegebenenfalls synonym zum Begriff "Kassette" verwendet.

Unter einer "Blasform" wird eine Form zur Herstellung von Kunststoffhohlkörpern mittels Blasformens verstanden. Beim Streckblasformen eines solchen PET-Behälter, beispielsweise einer Kunststoffflasche, wird ein Vorformling beispielsweise mittels IR-Heizstrahlern erhitzt und in eine Hohlform eingebracht, deren innere Wandung einen Hohlraum umgibt, der die äußere Form des zu formenden PET-Behälter aufweist. Die innere Wandung der Hohlform gibt die Kontur der Wandung des zu formenden PET-Behälter vor. Der erwärmte und auf diese Weise thermoplastisch verformbar gemachte Vorformling wird beispielsweise mittels eines Gases, z.B. Luft, das in den Vorformling geleitet wird, ausgedehnt, bis er sich an die innere Wandung der Blasform anlegt und deren Kontur annimmt. Der so geformte Kunststoffhohlkörper kann anschließend aus der Form entnommen und weiteren Prozessen zugeführt werden. Eine solche Blasform kann beispielsweise zwei oder mehr Blasformteile umfassen, zum Beispiel zwei halbschalige seitliche Formhälften und ein Bodenformteil.

Wenn hier von einer "radialen Richtung" gesprochen wird, ist, sofern sich aus dem Zusammenhang nicht eindeutig etwas anderes ergibt, eine Richtung gemeint, die senkrecht auf der Längsachse der Blasform steht. Im Falle beispielsweise einer allgemein zylindrischen Blasform ist mit der Längsachse die Rotationsachse gemeint.

Unter einem "Vorformling" ("Preform") wird ein Vorrohling aus einem thermoplastischen Kunststoff für die spätere Blasformung verstanden, der durch Spritzgießen hergestellt sein kann. Beispielsweise kann es sich um einen Hohlkörper aus Polyethylenterephthalat (PET) handeln, der allgemein zylindrisch mit einem Boden und einem gegenüberliegenden Flaschengewinde ausgebildet ist. Der Vorformling wird zunächst auf eine geeignete Verarbeitungstemperatur aufgeheizt, so dass der Kunststoff in einen zähflüssigen Zustand übergeht, und während der anschließenden Blasformung mittels eines formgebenden Blaswerkzeuges zum Endprodukt, z.B. einer Flasche, ausgeformt, d.h. aufgeblasen, so dass er sich an die Kontur des Blaswerkzeuges anlegt.

Unter einem "PET-Behälter" wird hier ein Hohlkörper verstanden, der mit einer Kunststoffwandung aus Polyethylenterephthalat (PET) ausgekleidet bzw. ausgestattet ist, beispielsweise eine Flasche zur Aufnahme einer Flüssigkeit, beispielsweise Saft, Wasser, Sojasauce oder dergleichen. Bei PET handelt es sich um einen Thermoplast.

Unter einer "Griffhalterung" wird hier ein Teil oder Bereich eines PET-Behälter verstanden, der zur Aufnahme eines Griffs ausgestaltet ist. Es kann sich beispielsweise um einen Bereich in der Seitenwandung eines PET-Behälter handeln, der mit Hinterschneidungen versehen ist, mit denen ein Griff mit komplementär hierzu ausgebildeten Griffelementen, z.B. entsprechend ausgestalteten Vorsprüngen, in Eingriff gebracht werden kann. Eine Griffhalterung kann beispielsweise auch eine muldenartige Vertiefung in der Seitenwandung umfassen, die Hinterschneidungen aufweist.

Der Begriff "Hinterschneidung" wird hier für eine Vertiefung, Einkerbung, Auskehlung, Ausnehmung, Einbuchtung oder dergleichen in der Wandung eines PET-Behälter verwendet, die mit einem komplementär ausgebildeten Element, beispielsweise einem Vorsprung, eines Griffs in Eingriff gebracht werden kann. Die oben genannten Begriffe werden hier synonym zueinander verwendet.

Wenn hier der Begriff "komplementär" in Bezug auf Elemente der Blasform, der Kassette oder des herzustellenden PET-Behälter verwendet wird, bezieht sich dies darauf, dass die jeweiligen Elemente eine räumlich-körperliche Beziehung zueinander aufweisen, bei der das erste Element eine "positive" und das komplementäre Element eine "negative" Ausprägung aufweist, oder umgekehrt. Beispielsweise kann eine Blasform eine innere Kontur aufweisen, die zu einer Behälteroberfläche komplementär ist, d.h. eine innere (negative) Kontur aufweisen, die der (positiven) Kontur der Wandung eines mit Hilfe der Blasform zu formenden Behälters entspricht.

Der Ausdruck "einclipsbar" in Bezug auf einen Griff bedeutet, dass der Griff mittels einer formschlüssigen Schnappverbindung mit der Griffhalterung des Kunststoffkörpers verbindbar ist. Hierzu weist der Griff beispielsweise ein Griffelement auf, z.B. einen Vorsprung, der mit einer Hinterschneidung der Griffhalterung in Eingriff gebracht werden kann.

Unter einem "Formungselement" wird hier ein Element verstanden, durch das mechanisch eine Hinterschneidung in die Wandung eines PET-Behälter geformt werden kann, indem das Element gegen die erwärmte und dadurch plastisch verformbare Wandung vorgeschoben und die Wandung eingedrückt wird, wobei sich das weiche Wandmaterial zumindest um einen Teil des Formungselements herumlegt. Gegebenenfalls wird hier für das Formungselement synonym auch der Begriff "Schieberelement" oder "Prägungselement" verwendet.

Der Ausdruck, wonach das Formungselement "zumindest teilweise aus dem Kassettengehäuse vor- und in das Kassettengehäuse rückführbar ist", bedeutet, dass das Formungselement mit mindestens einem Teil davon, beispielweise einem Endabschnitt, Vorsprung, Schenkel oder dergleichen, aus dem Kassettengehäuse vorgeschoben und in das Kassettengehäuse zurückgeführt werden kann.

Unter einem "Fluidzylinder" wird hier ein fluidtechnisches Antriebselement für lineare Bewegungen verstanden. Ein Fluidzylinder umfasst einen Kolben, dessen Bewegung über eine Kolbenstange auf zu bewegende Teile übertragen wird. Der Kolben wird mittels eines Fluids, das ein Gas oder eine Flüssigkeit sein kann, bewegt. Der Begriff "Fluidzylinder" umfasst die Begriffe "Pneumatikzylinder" und "Hydraulikzylinder". Der Ausdruck "fluidisch betätigt" bedeutet eine Betätigung eines Fluidzylinders mittels eines Fluids, z.B. eine pneumatische oder hydraulische Betätigung.

Der Ausdruck, wonach das mindestens eine Formungselement mit dem mindestens einen Fluidzylinder mechanisch gekoppelt ist, bedeutet, dass das mindestens eine Formungselement mit dem mindestens einen Fluidzylinder mechanisch so verbunden ist, dass bei Betätigung des Fluidzylinder auch eine Betätigung des Formungselements erfolgt, d.h., das mindestens eine Formungselement oder ein Teil davon aus dem Kassettengehäuse vor- oder in das Kassettengehäuse zurückgeführt wird. Die mechanische Kopplung kann beispielsweise mittels Verbindungsgliedern erfolgen, die drehbar auf Achsen gelagert sein können.

Der Ausdruck, wonach die Kassette in der Öffnung in der Wandung einer der Blasformteile "lösbar angeordnet" ist, bedeutet, dass die Kassette aus der Öffnung zerstörungsfrei herausnehmbar angeordnet ist. Das schließt ein, dass die Kassette beispielsweise mittels Verschraubens oder anderweitig in geeigneter Weise in der Öffnung fixiert ist, wodurch beispielsweise verhindert wird, dass sich die Kassette während des bestimmungsgemäßen Gebrauchs der Blasform unbeabsichtigt verschiebt oder aus der Öffnung löst. Der Ausdruck, wonach die Kassette "die Öffnung verschließt" bedeutet, dass die Kassette in der Einbausituation die Öffnung zumindest in axialer und Umfangsrichtung bezüglich der Blasform ausfüllt. Das Kassettengehäuse ist dafür so dimensioniert, dass es mit seinen seitlichen Wänden rundum an der Laibung der Öffnung anliegt. Bevorzugt füllt die Kassette die Öffnung auch in radialer Richtung der Blasform aus.

Die erfindungsgemäße Kassette, die hier gegebenenfalls auch als "Schieberkassette" bezeichnet wird, weil sie mindestens ein Formungselement beinhaltet, das in durch Erwärmen thermoplastisch verformbar gemachtes Wandmaterial eines Kunststoffbehälters vorgeschoben werden kann, umfasst ein Kassettengehäuse mit mindestens einem darin angeordneten Formungselement, das zumindest teilweise aus dem Kassettengehäuse vor- und in das Kassettengehäuse zurückgeführt werden kann, um in dem thermoplastisch verformbaren Wandmaterial eines PET-Behälter eine Hinterschneidung zu formen. Wenn mehrere Formungselemente vorhanden sind, können diese Formungselemente gleich ausgebildet sein, so dass sie symmetrisch in dem Kassettengehäuse angeordnet sind. Dies verringert die Anzahl der benötigten Teile, wodurch die Herstellung kostengünstiger wird. Darüber hinaus ist innerhalb des Kassettengehäuses mindestens ein Fluidzylinder angeordnet, der mit dem Formungselement mechanisch gekoppelt ist, und mittels dessen das Formungselement betätigt, d.h. vor- und zurückgeführt werden kann. Die Kassette enthält die für die Betätigung des Formungselements erforderlichen mechanischen Komponenten und kann daher beispielsweise modulartig ausgetauscht werden. Dadurch ist es beispielsweise möglich, die für die Formung von Hinterschneidungen in dem Kunststoffkörper vorgesehenen Komponenten einfach auszutauschen, beispielweise im Falle einer Fehlfunktion oder für den Fall, dass eine andere Geometrie der Griffhalterung und/oder der Hinterschneidungen realisiert werden soll. Der einfache Ausbau bzw. Austausch der Kassette erleichtert auch die Wartung einer Blasform, die zur Aufnahme einer erfindungsgemäßen Kassette ausgestaltet ist.

In einer besonders bevorzugten Ausführungsform weist die erfindungsgemäße Kassette mindestens eine in der Einbausituation zur Wandung des Blasformteils gerichtete Öffnung zum Anschluss einer Fluidleitung zur fluidischen Betätigung des mindestens einen Fluidzylinders auf. Es kann sich beispielsweise um eine seitlich an dem Kassettengehäuse angeordnete Öffnung handeln. Im Falle eines einfachwirkenden Fluidzylinders genügt eine Öffnung, im Falle eines doppeltwirkenden Zylinders sind zwei Öffnungen vorgesehen, über die das Fluid zugeführt werden kann. Im Falle einer bevorzugten Ausgestaltung mit zwei doppeltwirkenden Fluidzylindern, die jeweils mit einem Formungselement mechanisch gekoppelt sind, sind vorzugsweise vier Öffnungen zur fluidischen Versorgung der beiden Fluidzylinder angeordnet, wobei jeweils zwei Öffnungen auf einer Gehäuseseite und zwei Öffnungen auf der gegenüberliegenden Gehäuseseite vorgesehen sein können. Der oder die Fluidzylinder können bei dieser Ausgestaltung vorteilhaft über Fluidleitungen in der Blasformwandung mit Fluid versorgt und betrieben werden. Ein Kassettenmodul kann somit auf einfache Weise gegen ein anderes, welches mit entsprechenden Fluidanschlüssen ausgestattet ist, ausgetauscht werden, ohne dass es der vorherigen Entfernung von Fluid-Versorgungsleitungen bedarf.

In einer bevorzugten Ausgestaltung ist die erfindungsgemäße Kassette so dimensioniert, dass sie in der Einbausituation mit ihrem Kassettengehäuse nicht über die äußere Fläche der Wandung des Blasformteils vorsteht. Diese äußere Fläche wird hier gegebenenfalls auch als "rückseitige Fläche der Blasformwandung" oder "Rückseite des Blasformteils" bezeichnet. Mit der äußeren Fläche der Wandung des Blasformteils ist jene Fläche des Blasformteils gemeint, die vom Hohlraum der Blasform abgewandt ist, also die außen liegende Fläche der Wandung des Blasformteils, die der zum inneren Hohlraum gewendeten Fläche des Blasformteils, welche die Kontur des Kunststoffbehälters vorgibt, gegenüberliegt. Als Innenfläche des Blasformteils wird hier die zum Hohlraum weisende Fläche bezeichnet, die bei der Formung des PET-Behälter mit dessen Außenwand in Kontakt kommt. In dieser Ausführungsform ist die Kassette so ausgestaltet, dass sie beispielsweise im Falle einer allgemein zylindrischen Blasform in radialer Richtung, bezogen auf die Blasform, nicht über die Rückseite des Blasformteils vorsteht.

Die Kassette ist bevorzugt vollständig in die Wandung der Blasform integriert und die rückseitige Fläche des Kassettengehäuses fluchtet vorzugsweise mit der rückseitigen Fläche der Blasformwandung. Dabei kann das Kassettengehäuse so ausgestaltet sein, dass es in der Einbausituation mit seiner Rückwand die äußere Mantelfläche der Blasform für eine größte vorgesehene Behälterform im Bereich der Öffnung vervollständigt. Blasformen, die für kleinere Behälter vorgesehen sind, weisen dabei die gleichen Maße wie die Blasform für den größten vorgesehen Behälter auf. Daher ist die Kassette in diesem Fall tiefer in der Blasform angeordnet und fluchtet nicht mehr mit der äußeren Mantelfläche der Blasform. Weiter kann die Kassette bei den Blasformen der kleineren Behälter näher an den Flaschenhals verschoben sein. Die Verwendbarkeit der Kassette für mehrere Größen der Behälter ha den Vorteil, dass für die Kassetten dieser Behältergrößen gleiche Teile verwendet werden können, die dadurch billiger in der Herstellung werden. Weiter hat dies den Vorteil, dass im Falle eines Versagens viele Ersatzkassetten aus den anderen Blasformen verfügbar hat. Selbst bei einem Versagen mehrerer Kassetten versagen, wird daher ein Produktionsausfall vermieden, da eine Herstellung oder Lieferung von Ersatzkassetten nicht sofort nötig wird.

Im Falle beispielsweise einer allgemein zylindrischen Blasform ist die Rückwand der Kassette vorzugsweise so im Querschnitt kreisbogenförmig gekrümmt, dass sie im Bereich der Öffnung der Blasform die Außenwand des Blasformkörpers dessen zylindrischer Form entsprechend vervollständigt. Die Kassette ist in dieser bevorzugten Ausführungsform so dimensioniert und ausgestaltet, dass sie die Öffnung so verschließt, dass die rückseitige Fläche der Kassette ein Teil der äußeren Fläche des Blasformteils für die größten vorgesehen Behälter wird. Andere Ausgestaltungen sind ebenfalls möglich, beispielsweise eine ungekrümmt plan ausgebildete Rückwand.

In einer bevorzugten Ausführungsform der erfindungsgemäßen Kassette ist der mindestens eine Fluidzylinder ein Pneumatikzylinder, und das mindestens eine Formungselement ist pneumatisch betätigbar, d.h. aus dem Kassettengehäuse vor- und in das Kassettengehäuse rückführbar.

In einer bevorzugten Ausführungsform der erfindungsgemäßen Kassette weist das Kassettengehäuse ein hinteres Basisteil und ein gegenüber dem Basisteil vorspringendes Vorderteil auf, wobei das Vorderteil oder zumindest ein Bereich davon bevorzugt eine äußere Kontur aufweist, die komplementär ist zur Kontur mindestens eines Teils der Griffhalterung, und wobei das Vorderteil mindestens eine Öffnung aufweist, durch die das mindestens eine Formungselement aus dem Kassettengehäuse vor- und in das Kassettengehäuse rückführbar ist. Bei dieser Ausführungsform kann das Kassettengehäuse in der Einbausituation mit seinem hinteren Basisteil innerhalb der Wandung des Blasformteils angeordnet und gegebenenfalls mittels entsprechender Befestigungsmittel, zum Beispiel Verschraubungen, an der Wandung des Blasformformteils befestigt sein, während der gegenüber dem Basisteil vorspringende Vorderteil zumindest mit einem Teil in den Hohlraum der Blasform vorspringt. Der in den Hohlraum der Blasform vorspringende Vorderteil dient dazu, die Griffhalterung bzw. den Bereich, in dem später der Griff angeordnet wird, in dem zu formenden Kunststoffhohlkörper zu formen, beispielsweise eine Mulde innerhalb der Wandung des PET-Behälter. Der Vorderteil kann auch eine gegenüber seiner zum Hohlraum der Blasform gerichteten Vorderfläche ein noch weiter in Richtung Hohlraum vorspringende Rippe umfassen. In dem Vorderteil weist das Kassettengehäuse mindestens eine Öffnung auf, durch die das Formungselement bzw. ein Teil davon mittels des mindestens einen Fluidzylinders, beispielsweise eines Pneumatikzylinders, vor- und zurückgeführt werden kann. Es ist bevorzugt, wenn mindestens zwei Öffnungen in dem Vorderteil angeordnet sind, durch die jeweils ein Formungselement bzw. ein Teil davon mittels eines Fluidzylinders, beispielsweise eines Pneumatikzylinder, vor und zurückgeführt werden kann. Die Öffnungen liegen vorzugsweise in axialer Richtung, bezogen auf die Blasform, voneinander beabstandet, und öffnen sich bevorzugt auch in axialer Richtung, so dass die Formungselemente bzw. deren Teile sich bei Betätigung der Fluidzylinder in axialer Richtung in den Hohlraum vorschieben.

Erfindungsgemäß umfasst die Kassette zwei Formungselemente und zwei Fluidzylinder, wobei jeder Fluidzylinder mechanisch mit jeweils nur einem zugehörigen Formungselement verbunden ist. Jedem Formungselement ist damit ein Fluidzylinder zugeordnet.

In einer Ausführungsform der erfindungsgemäßen Kassette können (a) die beiden Formungselemente in Bezug auf eine erste Ebene spiegelsymmetrisch zueinander und in einer Richtung senkrecht zur ersten Ebene voneinander beabstandet in einer gemeinsamen zweiten Ebene in dem Kassettengehäuse angeordnet sein. Erfindungsgemäß sind die beiden Fluidzylinder mit ihren Längsachsen in einem Winkel zu dem jeweils zugehörigen Formungselement und mit ihren Längsachsen überkreuz zueinander angeordnet. Weiter können die Fluidzylinder in Bezug auf eine Richtung senkrecht zur zweiten Ebene voneinander beabstandet angeordnet sein. Auf diese Weise ist eine besonders kompakte Bauweise bei guter Kraftübertragung möglich, die eine vollständige Aufnahme der mechanischen Komponenten zur Formung der Hinterschneidungen in das Kassettengehäuse und gleichzeitig die nötigen Weglängen für die Formungselemente in Richtung Hohlraum ermöglicht.

In einem weiteren Ausführungsbeispiel können die beiden Formungselemente jeweils in verschiedene, vorzugsweise einander entgegengesetzte, Richtungen aus dem Kassettengehäuse vor- und in das Kassettengehäuse zurückführbar sein.

In einer anderen Ausführungsform können die Fluidzylinder jeweils eine Rückwand zum Anschluss an eine Fluidleitung aufweisen, wobei die Rückwand einen Winkel zwischen 90° und 0°, vorzugsweise zwischen 80° und 10°, weiter vorzugsweise zwischen 70° und 20°, weiter vorzugsweise zwischen 60° und 30°, weiter vorzugsweise zwischen 50° und 40°, am meisten bevorzugt von 45°, aufweist.

In einem weiteren Aspekt stellt die Erfindung eine Blasform zum Streckblasformen eines PET-Behälter mit Griffhalterung für einen nach dem Streckblasformen einclipsbaren Griff bereit, wobei die Griffhalterung mindestens eine Hinterschneidung in dem Kunststoffhohlkörper zur Aufnahme eines komplementär ausgebildeten Griffelements umfasst, umfassend
a) mindestens zwei Blasformteile, die aneinandergelegt einen Hohlraum bilden, der die äußere Form des zu formenden PET-Behälter aufweist, wobei die Wandung mindestens einer der zwei Blasformteile eine Öffnung aufweist, und
b) eine in der Öffnung lösbar angeordnete und die Öffnung verschließende Kassette gemäß dem oben beschriebenen ersten Aspekt der Erfindung.

In einer besonders bevorzugten Ausführungsform der erfindungsgemäßen Blasform steht die Kassette in vom Hohlraum der Blasform abgewandter Richtung nicht gegenüber der äußeren Fläche der Wandung der Blasform vor. In dieser Ausführungsform ist die Kassette so dimensioniert, dass sie rückseitig nicht über die Wandung der Blasform vorsteht. Die Kassette ist bevorzugt vollständig in die Wandung der Blasform integriert. Weiter kann die rückseitige Fläche des Kassettengehäuses vorzugsweise mit der rückseitigen Fläche der Blasformwandung fluchten. Dabei ist es bevorzugt, wenn das Kassettengehäuse so ausgestaltet ist, dass es in der Einbausituation mit seiner Rückwand die äußere Mantelfläche der Blasform im Bereich der Öffnung vervollständigt. Im Falle beispielsweise einer allgemein zylindrischen Blasform ist die Rückwand der Kassette vorzugsweise so im Querschnitt kreisbogenförmig ausgebildet, dass sie die äußere Fläche des Blasformteils der zylindrischen Form entsprechend vervollständigt. Die Kassette ist in dieser bevorzugten Ausführungsform so dimensioniert und ausgestaltet, dass sie die Öffnung so verschließt, dass die rückseitige Fläche der Kassette die äußere Fläche des Blasformteils im Bereich der Öffnung vervollständigt.

In einem weiteren Beispiel kann die Kassette in der Wandung versenkt sein. In diesem Fall ist die Kassette weiter innen in der Blasform angeordnet. Dies kann z. B. eintreten, wenn die Kassette für die Ausformung von Griffen an Behältern verwendet wird, die mit der gleichen Vorrichtung wie größere Behälter. Die äußeren Dimensionen der Blasform sind bei den großen und kleinen Behältern gleich. Die kleineren Behälter sind dementsprechend tiefer in der Blasform angeordnet, so dass die Kassette dann tiefer in der Blasform positioniert werden muss, um einen Griffhalterung an dem Behälter ausformen zu können.

In einem weiteren Aspekt betriff die vorliegende Erfindung ein Verfahren zum Streckblasformen eines PET-Behälter mit Griffhalterung für einen nach dem Streckblasformen einclipsbaren Griff, wobei die Griffhalterung mindestens eine Hinterschneidung in dem Kunststoffhohlkörper zur Aufnahme eines komplementär ausgebildeten Griffelements umfasst, umfassend die Schritte des a) Einbringens eines vorgewärmten Vorformlings aus thermoplastischem Kunststoffmaterial in eine erfindungsgemäße Blasform und b) Streckblasens des Vorformlings unter Ausbildung der Hinterschneidungen mittels einer erfindungsgemäßen Kassette.

Bei dem erfindungsgemäßen Verfahren wird ein Vorformling, der in geeigneter und dem Fachmann bekannter Weise auf eine für das Streckblasen geeignete Temperatur erwärmt wurde, in eine erfindungsgemäße Blasform eingebracht. Der Vorformling wird mittels Streckblasens zu einem Kunststoffhohlkörper mit einer durch die Blasform vorgegebenen Kontur geformt. In den noch weichen Kunststoff des PET-Behälter, z.B. einer PET-Flasche, werden mittels der Kassette Hinterschneidungen in eine Griffhalterung bzw. einen Bereich der Wandung des PET-Behälter, der die Griffhalterung umfasst eingebracht. Nach dem Entfernen des PET-Behälter aus der Form kann ein Griff mittels komplementärer Griffelemente in die Hinterschneidungen der Griffhalterung eingeclipst werden.

In noch einem weiteren Aspekt betrifft die Erfindung die Verwendung einer erfindungsgemäßen Blasform oder einer erfindungsgemäßen Kassette zur Herstellung eines PET-Behälter mit Griffhalterung für einen einclipsbaren Griff.

Der Erfindung wird im Folgenden anhand von beispielhaften Zeichnungen rein zu Veranschaulichungszwecken näher erläutert.
Figur 1. Schematische Schnittansicht eines Teils einer Ausführungsform einer erfindungsgemäßen Blasform mit eingesetzter erfindungsgemäßer Kassette.
Figur 2. Vereinfachte schematische Querschnittansicht der in Figur 1 dargestellten Blasform mit eingesetzter Kassette.
Figur 3. Räumliche Ansicht seitlich von vorne auf eine Ausführungsform der erfindungsgemäßen Kassette.
Figur 4. Draufsicht auf die in Figur 3 dargestellte Ausführungsform der erfindungsgemäßen Kassette.
Figur 5. Seitliche Ansicht auf die in Figur 3 dargestellte Ausführungsform der erfindungsgemäßen Kassette unter Weglassung einer Gehäusehälfte.
Figur 6. Räumliche Ansicht seitlich von vorne auf die in Figur 3 dargestellte Ausführungsform der erfindungsgemäßen Kassette unter Weglassung einer Gehäusehälfte.
Figur 7. Seitenansicht eines Teils der in Figur 3 dargestellten Ausführungsform einer erfindungsgemäßen Kassette.
Figur 8. Räumliche Ansicht seitlich von vorne der in Figur 7 dargestellten Teile einer erfindungsgemäßen Kassette.

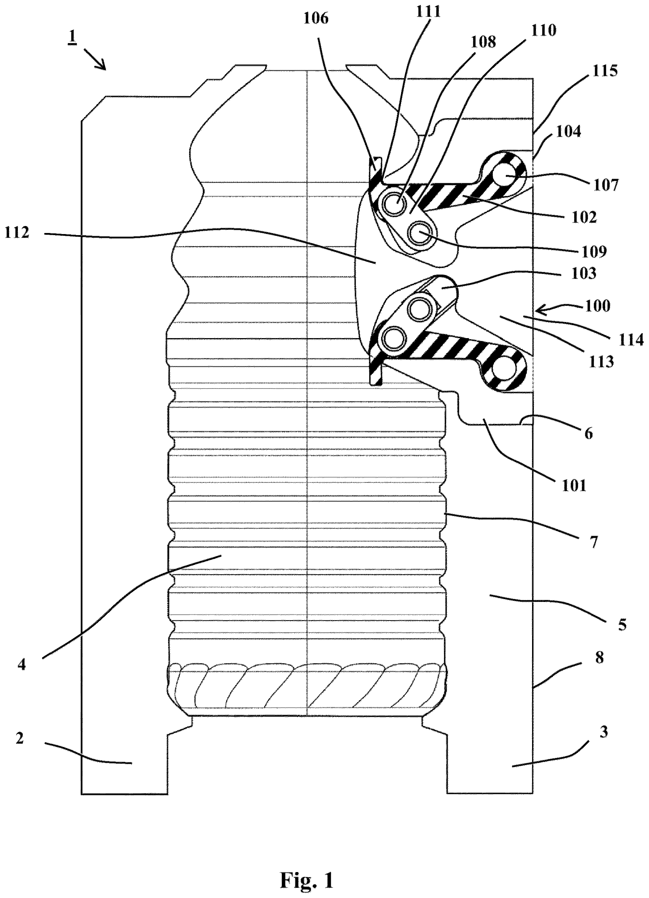

In Figur 1 zeigte eine vereinfachte schematische Schnittansicht eines Teils einer Ausführungsform einer erfindungsgemäßen Blasform 1 mit eingesetzter erfindungsgemäßer Kassette 100. Dargestellt ist ein Längsschnitt durch eine allgemein zylindrisch geformte Blasform 1 mit Blasformteilen 2, 3, die aneinandergelegt einen Hohlraum 4 bilden, wobei auch Teile der nicht in Schnittebene liegenden Innenfläche der Blasformteile 2, 3 zur besseren Veranschaulichung mit dargestellt sind. Die Kontur der Innenfläche 7 der Wandung 5 der Blasformteile 2, 3 ist komplementär zur Kontur des mit Hilfe der Blasform 1 zu formenden PET-Behälter ausgestaltet. In einem der Blasformteile 2, 3 ist eine Öffnung 6 angeordnet, in die eine erfindungsgemäße Kassette 100, welche hier gegebenenfalls auch als Schieberkassette bezeichnet wird, lösbar eingesetzt ist. Die Kassette 100 umfasst ein Kassettengehäuse 101, dessen Rückwand 114 mit ihrer äußeren Fläche 115 mit der äußeren Fläche 8 des Blasformteils 3 fluchtet. Die Kassette 100 steht somit mit ihrem Kassettengehäuse 101 in radialer Richtung nicht über die äußere Fläche 8 der Blasformwandung 5 vor. Das Kassettengehäuse 101 umfasst ein Basisteil 113 und ein zum Hohlraum 4 gerichtetes Vorderteil 112, mit dem das Kassettengehäuse 101 gegenüber dem Basisteil 113 und in den Hohlraum 4 vorspringt. Die Kontur des Vorderteils 112 ist so ausgestaltet, dass damit die Griffhalterung in einem zu formenden Kunststoffhohlkörper geformt werden kann. In dem Kassettengehäuse 101 sind zwei Formungselemente 102 und zwei Fluidzylinder 103, die hier als Pneumatikzylinder ausgebildet sind, angeordnet. Jedes Formungselement 102 ist einem Fluidzylinder 103 zugeordnet. In der Darstellung ist nur ein Fluidzylinder 103 sichtbar. Die Formungselemente 102 sind hier allgemein L-förmig ausgestaltet und im Bereich des Basisteils 113 drehbar auf ersten Achsen 107 gelagert. Im Bereich des Vorderteils 112 sind die Formungselemente 102 jeweils auf einer zweiten Achse 108 gelagert und über ein Verbindungsglied 110, das auf der zweiten Achse 108 und einer mit der Kolbenstange 122 des Fluidzylinders 103 verbundenen Achse 109 drehbar gelagert ist, mit der Kolbenstange 122 des jeweiligen Fluidzylinders 103 mechanisch gekoppelt. Bei einer Betätigung eines Fluidzylinders 103 wird die lineare Bewegung des Kolbens 123 über die Kolbenstange 122 und das Verbindungsglied 110 in eine Drehbewegung des Formungselements 102 umgesetzt. Das Formungselement 102 ist in dieser Ausführungsform der erfindungsgemäßen Kassette 100 allgemein L-förmig oder hakenförmig ausgebildet. Ein Schenkel 103 des Formungselements 102 ist im Bereich einer Öffnung 111 im Vorderteil 112 des Kassettengehäuses 101 angeordnet und wird bei Betätigung des Fluidzylinders 103 aus der Öffnung 111 in Richtung Hohlraum 4 vor- oder in Richtung Kassettengehäuse zurückgeführt. Im Falle eines doppeltwirkenden Fluidzylinders 103 kann das Formungselement 102 mit seinem Schenkel 106 mittels des Fluidzylinders 103 vorgeschoben und zurückgezogen werden.

Im Falle eines einfachwirkenden Fluidzylinders 103 könnte beispielsweise ein Federmechanismus vorgesehen sein, der das Formungselement 102 aus dem Gehäuse vor- oder zurückschiebt. Bevorzugt ist eine Ausführungsform mit doppeltwirkenden Fluidzylindern 103. In Figur 1 ist der Schenkel 106 des Formungselement 102 aus der Öffnung 111 in Richtung Hohlraum 4 vorgeschoben. Bei dieser Ausführungsform einer erfindungsgemäßen Blasform 1 sind zwei Formungselemente 102 spiegelsymmetrisch zueinander in axialer Richtung der Blasform 1 übereinander in einer gemeinsamen Ebene angeordnet. Die Öffnungen 111 sind in dem vorspringenden Vorderteil 112 des Kassettengehäuses 101 in axialer Richtung zum Hohlraum 4 gerichtet. Bei Betätigung der Formungselemente 103 werden die Schenkel 106 ebenfalls in axialer Richtung durch die Öffnungen 111 aus dem Kassettengehäuse 101 vorgeschoben und wieder zurückgezogen. Bei der hier dargestellten Ausführungsform sind in der Rückwand 114 des Kassettengehäuses 101 Öffnungen 104 zum Zugriff auf die Formungselemente 102 und Öffnungen 120 zum Zugriff auf die Fluidzylinder 103 bzw. für die Verschraubung der Fluidzylinder 131 vorgesehen, die im Wesentlichen zu Wartungszwecken dienen.

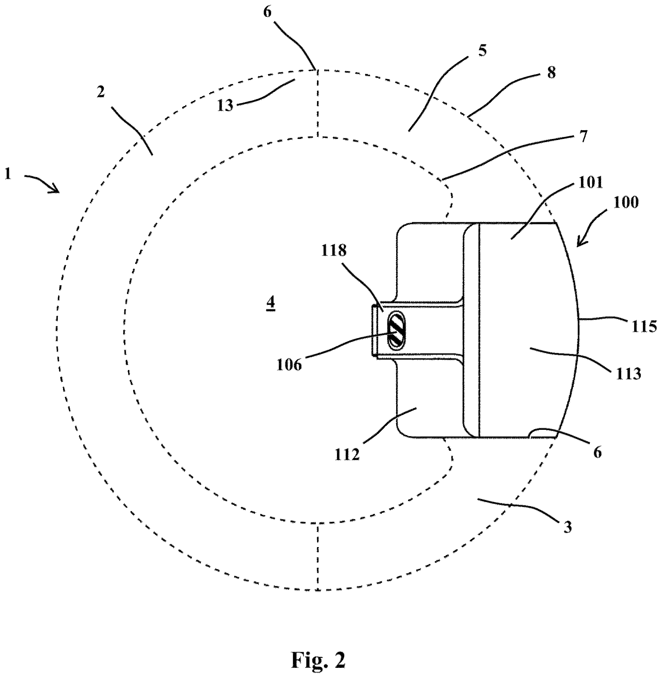

Figur 2 zeigt eine vereinfachte schematische Querschnittansicht einer Ausführungsform einer Blasform 1 gemäß der Erfindung. Die Blasformteile 2, 3 sind hier nur schematisch angedeutet. Wie aus Figur 2 ersichtlich ist, ist die Rückwand 114 so gekrümmt, dass sie an die äußere Form der Blasform 1 angepasst ist. Die Rückwand 114 der Kassette 100 beschreibt im Querschnitt einen Kreisbogen, der demjenigen entspricht, der im Bereich der Öffnung 6 in dem ansonsten halbkreisförmigen Blasformteil 3 fehlt. Der gegenüber dem Basisteil 113 vorspringende Vorderteil 112 der Kassette 100 weist hier eine zentrale, in axialer Richtung in Bezug auf die Blasform 1 verlaufende Rippe 118 auf, die noch weiter in den Hohlraum 4 vorspringt und zur Formung des Bereichs des PET-Behälter dient, der zur Aufnahme der Basis eines einzuclipsenden Griffs dient.

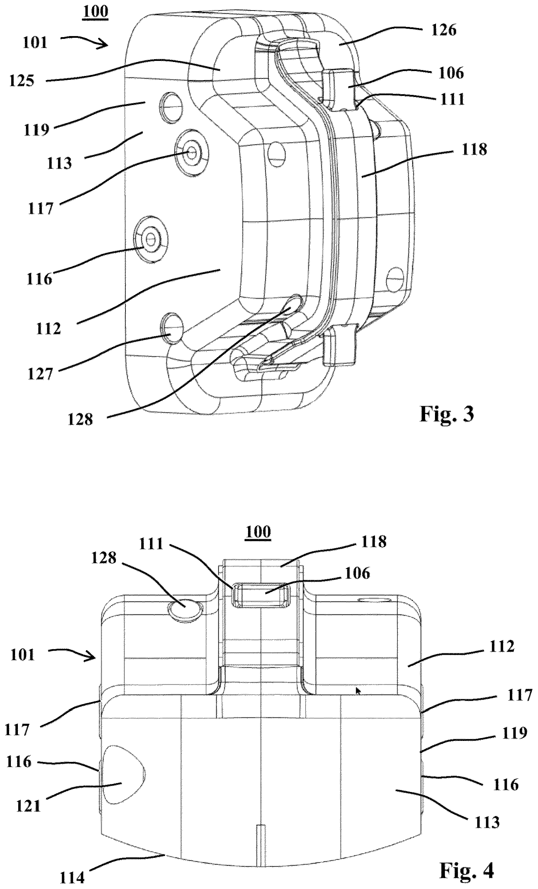

Figur 3 zeigt eine räumliche Ansicht einer Ausführungsform einer erfindungsgemäßen Kassette 100 seitlich von vorne. "Vorne" bedeutet hier den Teil der Kassette 100, der in der Einbausituation zum Hohlraum 4 der Blasform 1 gerichtet ist. Die Kassettengehäuse 101 umfasst hier zwei Gehäusehälften 125, 126, die mittels Schraubverbindungen 121 miteinander verbunden sind. Das Kassettengehäuse 101 kann beispielsweise aus Metall oder einem geeigneten Kunststoff gefertigt sein. In der Seitenwand 119 der Kassette 100 sind Öffnungen 116, 117 zum Anschluss an Fluidleitungen, z.B. Pneumatikleitungen, in der Wandung 5 der Blasform 1 vorgesehen. Hier sind jeweils zwei Öffnungen 116, 117 für einen doppeltwirkenden Fluidzylinder 103 vorgesehen. Zwei weitere Öffnungen 116, 117 befinden sich in der hier nicht sichtbaren gegenüberliegenden Seitenwand 119 (s. Figur 4). Mindestens eine weitere Öffnung 127 dient dazu, die Kassette 100 mit der Blasform 1 zu verbinden. Die Verbindung kann dabei mittels Zylinderschrauben bewirkt werden. Damit wird die Kassette 100 gegen den auf sie wirkenden Druck bei der Formgebung eines Behälters in der Blasform 1 gesichert.

Das Basisteil 113 der Kassette 100 ist hier allgemein quaderförmig, der gegenüber dem Basisteil 113 vorspringende Vorderteil 112 allgemein prismatisch geformt, wobei die Basis des Vorderteils 112 in axialer Richtung kleiner dimensioniert ist als das Basisteil 113. Der Vorderteil 112 ist mittig auf dem Basisteil 113 angeordnet. Vordere Ecken und Kanten des Kassettengehäuses 101 sind abgerundet. Zentral auf der vorderen Fläche des Vorderteils 112 ist eine vorspringende Rippe 118 angeordnet, die zur Formung der Kavität in dem zu formenden Kunststoffhohlkörper geeignet ist, welche die Basis des einzuclipsenden Griffs aufnimmt. Die Öffnungen 111, durch welche die Schenkel 106 der Formungselemente 102 aus dem Kassettengehäuse 101 vor- und zurückgeführt werden können, sind in der zentralen Rippe 118 angeordnet und weisen in der Einbausituation in axialer Richtung zum Hohlraum 4 der Blasform 1. Die Schenkel 106, die hier in vorgeschobenem Zustand dargestellt sind, verlaufen im Wesentlichen parallel zur Rückwand 114 und somit in Einbausituation in axialer Richtung in Bezug auf die Blasform 1.

Die in Figur 3 dargestellte Ausführungsform der erfindungsgemäßen Kassette 100 ist in Figur 4 in einer Draufsicht dargestellt. Sichtbar sind hier die in den beiden Seitenwänden 119 der Kassette 100 vorgesehenen Öffnungen 116, 117 zum Anschluss an Fluidleitungen in der Blasformwandung 5, über die die beiden Fluidzylinder 103 fluidisch betätig werden können. Die gewölbte Rückwand 114 der Kassette 100 ist hier ebenfalls gut sichtbar. In der Einbausituation folgt die Kontur der Rückwand 114 damit der Kontur der äußeren Fläche 8 der Wandung 5 der Blasform 1. Überdies steht sie in der Einbausituation nicht gegenüber der äußeren Fläche 8 der Wandung 5 der Blasform 1 vor.

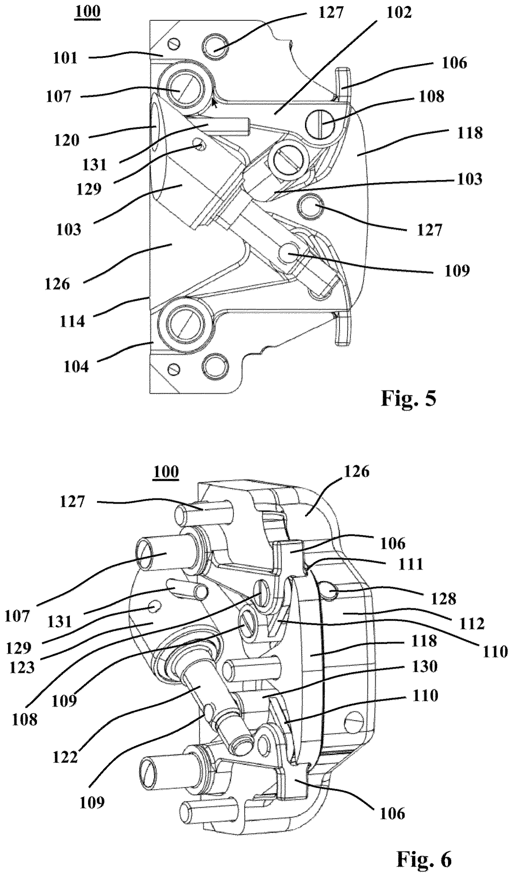

Die Figuren 5 und 6 zeigen die in Figur 3 dargestellte Ausführungsform der erfindungsgemäßen Kassette 100 in einer Darstellung, bei der eine Formhälfte 125, 126 zur besseren Übersicht entfernt ist. Figur 5 zeigt eine Seitenansicht, Figur 6 eine räumliche Ansicht seitlich von vorne. Hier ist gut erkennbar, wie jeweils ein Fluidzylinder 103 mit einem Formungselement 102 mechanisch gekoppelt ist und dass die mechanischen Bestandteile zur Betätigung der Formungselemente 102, also die Kombination aus Fluidzylindern 103, Formungselementen 102 und Kopplungselementen zur mechanischen Kopplung von Fluidzylinder 103 und Formungselement 102 vollständig innerhalb des Kassettengehäuses 101 untergebracht sind. Sichtbar sind hier auch eine Bohrung 129 als Teil der Fluidzufuhr zum Vorschieben des Kolbens 123 des doppeltwirkenden Fluidzylinders 103 und die Verschraubung 131 des Fluidzylinders. Das Verbindungsglied 110 ist an eine Hülse 130 angeformt, die konzentrisch drehbar auf der mit der Kolbenstange 122 verbundenen Achse 109 gelagert ist.

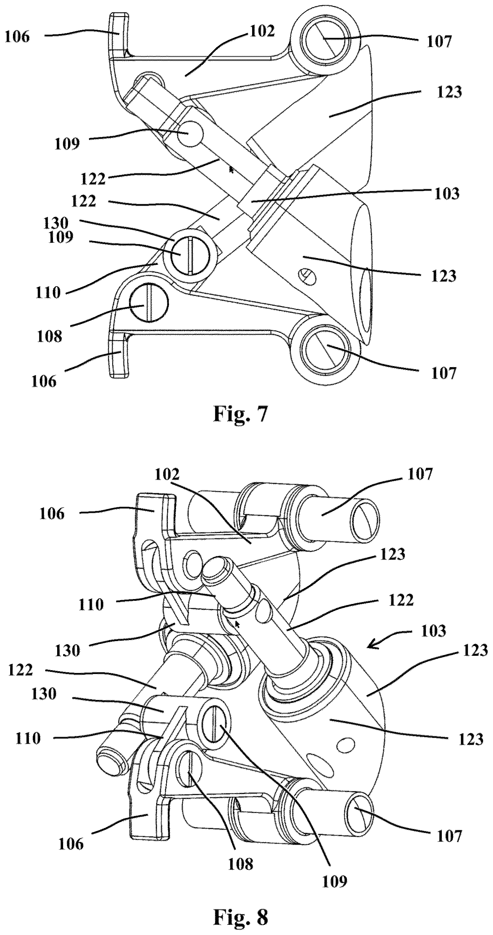

Die Figuren 7 und 8 zeigen zur besseren Übersicht lediglich die Anordnung der mechanischen Elemente zur Betätigung der Formungselemente 102 bei der in Figur 3 dargestellten Ausführungsform der erfindungsgemäßen Kassette 100. Bei der hier dargestellten Ausführungsform sind die beiden Formungselemente 102 in Bezug auf eine erste Ebene spiegelsymmetrisch zueinander und in einer Richtung senkrecht zur ersten Ebene voneinander beabstandet in einer gemeinsamen zweiten Ebene angeordnet. Dies ist jedoch optional, so dass in anderen Ausführungsbeispielen die Formungselemente 102 nicht spiegelsymmetrisch angeordnet sind.

Die beiden Fluidzylinder 103 sind mit ihren Längsachsen in einem Winkel zu dem jeweils zugehörigen Formungselement 102 und überkreuz zueinander angeordnet. Sie können weiter optional in Bezug auf eine Richtung senkrecht zur zweiten Ebene voneinander beabstandet angeordnet sein. In der Einbausituation liegen die Formungselemente 102 in axialer Richtung der Blasform übereinander, wobei die Schenkel 106 der Formungselemente 102 sich entgegengesetzt in axialer Richtung erstrecken. In Bezug auf einen zu formenden Kunststoffhohlkörper, z.B. eine Flasche, formen die Formungselemente 102 in einer durch insbesondere den Vorderteil 112 der Kassette 100 geformten Kavität in der Wandung des PET-Behälter obere und untere Hinterschneidungen, in die ein Griff mit entsprechend komplementär ausgestalteten Vorsprüngen eingeclipst werden kann. Die Fluidzylinder 103 sind hier beidseitig zu der Ebene, in der die Formungselemente 102 angeordnet sind, angeordnet, so dass die Formungselemente 102 zwischen den Fluidzylindern 103 liegen. Die Fluidzylinder 103 sind so angeordnet, dass ihre Längsachsen sich bei einer seitlichen Ansicht überkreuzen bzw. in einem Winkel zueinander verlaufen. In Bezug auf das Kassettengehäuse 101 ergibt sich damit, dass der Kolben 123 des ersten Fluidzylinders 103 in einem Teil des Basisteils 113 angeordnet ist, während der Kolben 123 des zweiten Fluidzylinders 103 in dem gegenüberliegenden Teil angeordnet ist, in Bezug auf die Einbausituation in einer Blasform 1 beispielsweise im oberen und unteren Teil des Basisteils 113. Der Fluidzylinder 103, dessen Kolben 123 im oberen Teil des Basisteils 113 angeordnet ist, ist dabei mit seiner Kolbenstange 122 mit dem unteren Formungselement 102 mechanisch gekoppelt, der Fluidzylinder 103, dessen Kolben 123 im unteren Teil des Basisteils 113 angeordnet ist, ist mit seiner Kolbenstange 122 mit dem oberen Formungselement 102 mechanisch gekoppelt. Diese Anordnung ermöglicht eine kompakte Bauweise der Kassette 100. Gleichzeitig sind Wegstrecken realisierbar, die erforderlich sind, um ausreichende Hinterschneidungen in einem Kunststoffhohlkörper formen zu können.

## Patentansprüche

1. Kassette (100) zum Einsatz in eine Öffnung (6) einer Wandung (5) eines Blasformteils (2, 3) einer Blasform (1) zum Streckblasformen eines PET-Behälter mit Griffhalterung für einen nach dem Streckblasformen einclipsbaren Griff, wobei die Griffhalterung mindestens eine Hinterschneidung in dem PET-Behälter zur Aufnahme eines komplementär ausgebildeten Griffelements umfasst, und wobei die Kassette (100) folgendes umfasst:
- ein Kassettengehäuse (101)
- mindestens ein innerhalb des Kassettengehäuses (101) angeordnetes und durch eine Öffnung (110) in dem Kassettengehäuse (101) aus dem Kassettengehäuse (101) vor- und in das Kassettengehäuse (101) rückführbares Formungselement (102) zur Formung der mindestens einen Hinterschneidung in thermoplastisch verformbarem Wandmaterial eines PET-Behälters, und
- mindestens ein innerhalb des Kassettengehäuses (101) angeordneter und mit dem mindestens einen Formungselement (102) mechanisch gekoppelter Fluidzylinder (103),
wobei das mindestens eine Formungselement (102) mittels des Fluidzylinders (103) zumindest teilweise aus dem Kassettengehäuse (101) vor- und in das Kassettengehäuse rückführbar ist,
wobei die Kassette (100) zwei Formungselemente (102) und zwei Fluidzylinder (103) umfasst, wobei jeder Fluidzylinder (103) mechanisch mit jeweils nur einem zugehörigen Formungselement (102) verbunden ist, **dadurch gekennzeichnet, dass**
die beiden Fluidzylinder (103) mit ihren Längsachsen in einem Winkel zu dem jeweils zugehörigen Formungselement (102) und mit ihren Längsachsen überkreuz zueinander angeordnet sind.

2. Kassette (100) nach Anspruch 1, wobei die Kassette (100) mindestens eine in der Einbausituation zur Wandung des Blasformteils (2, 3) gerichtete Öffnung (116, 117) zum Anschluss einer Fluidleitung zur fluidischen Betätigung des mindestens einen Fluidzylinders (103) aufweist.

3. Kassette (100) nach Anspruch 1 oder 2, wobei die Kassette (100) so dimensioniert ist, dass sie in der Einbausituation mit dem Kassettengehäuse (101) nicht über die äußere Fläche (8) der Wandung (5) des Blasformteils (2, 3) vorsteht.

4. Kassette (100) nach einem der vorhergehenden Ansprüche, wobei der Fluidzylinder (103) ein Pneumatikzylinder ist und das mindestens eine Formungselement (102) pneumatisch vor- und rückführbar ist.

5. Kassette (100) nach einem der vorhergehenden Ansprüche, wobei das Kassettengehäuse (101) ein hinteres Basisteil (113) und ein gegenüber dem Basisteil (113) vorspringendes Vorderteil (112) aufweist, das Vorderteil (112) oder ein Bereich davon eine äußere Kontur aufweist, die komplementär ist zur Kontur mindestens eines Teils der Griffhalterung, und das Vorderteil (112) mindestens eine Öffnung (111) aufweist, durch die das mindestens eine Formungselement (102) aus dem Kassettengehäuse (101) vor- und in das Kassettengehäuse (101) rückführbar ist.

6. Kassette (100) nach einem der vorhergehenden Ansprüche , wobei die beiden Formungselemente (102) jeweils in verschiedene, vorzugsweise einander entgegengesetzte, Richtungen aus dem Kassettengehäuse (101) vor- und in das Kassettengehäuse (101) zurückführbar sind.

7. Kassette (100) nach einem der vorhergehenden Ansprüche, wobei die Fluidzylinder (103) jeweils eine Rückwand zum Anschluss an eine Fluidleitung aufweisen, wobei die Rückwand einen Winkel zwischen 90° und 0°, vorzugsweise zwischen 80° und 10°, weiter vorzugsweise zwischen 70° und 20°, weiter vorzugsweise zwischen 60° und 30°, weiter vorzugsweise zwischen 50° und 40°, am meisten bevorzugt von 45°, aufweist.

8. Blasform (1) zum Streckblasformen eines PET-Behälters mit Griffhalterung für einen nach dem Streckblasformen einclipsbaren Griff, wobei die Griffhalterung mindestens eine Hinterschneidung in dem PET-Behälter zur Aufnahme eines komplementär ausgebildeten Griffelements umfasst, umfassend
a) mindestens zwei Blasformteile (2, 3), die aneinandergelegt einen Hohlraum (4) bilden, der die äußere Form des zu formenden PET-Behälters aufweist, wobei die Wandung (5) mindestens einer der zwei Blasformteile (2, 3) eine Öffnung (6) aufweist, und
b) eine in der Öffnung (6) lösbar angeordnete und die Öffnung (6) verschließende Kassette (100) nach einem der vorhergehenden Ansprüche.

9. Blasform (1) nach Anspruch 8, wobei die Kassette (100) in vom Hohlraum (4) abgewandter Richtung nicht gegenüber der äußeren Fläche (8) der Wandung (5) des Blasformteils (2, 3) vorsteht.

10. Blasform (1) nach Anspruch 8 oder 9, wobei der mindestens eine Fluidzylinder (103) an eine Fluidleitung innerhalb der Wandung des Blasformteils (2, 3) angeschlossen ist.

11. Blasform (1) nach einem der Ansprüche 8 bis 10, wobei die Kassette (100) mit einem Vorderteil (112) in den Hohlraum (4) vorspringt und in dem Vorderteil (112) mindestens eine Öffnung (111) zum Hohlraum (4) vorhanden ist, durch die das mindestens eine Formungselement (102) in Richtung Hohlraum (4) vor- und rückführbar ist.

12. Verfahren zum Streckblasformen eines PET-Behälters mit Griffhalterung für einen nach dem Streckblasformen einclipsbaren Griff, wobei die Griffhalterung mindestens eine Hinterschneidung in dem PET-Behälter zur Aufnahme eines komplementär ausgebildeten Griffelements umfasst, umfassend die Schritte des a) Einbringens eines vorgewärmten Vorformlings aus thermoplastischem Kunststoffmaterial in eine Blasform (1) nach einem der Ansprüche 8 bis 11 und b) Streckblasens des Vorformlings unter Ausbildung der Hinterschneidungen mittels der Kassette (100).

13. Verwendung einer Blasform (1) nach einem der Ansprüche 8 bis 11 oder einer Kassette nach einem der Ansprüche 1 bis 7 zur Herstellung eines PET-Behälters mit Griffhalterung für einen einclipsbaren Griff.

## Claims

1. Cassette (100) for insertion into an opening (6) of a wall (5) of a blow moulding part (2, 3) of a blow mould (1) for stretch blow moulding a PET container with a handle mount for a handle which can be clipped in after the stretch blow moulding, wherein the handle mount comprises at least one undercut in the PET container for receiving a complementary handle element, and wherein the cassette (100) comprises the following:
- a cassette housing (101)
- at least one moulding element (102), which is arranged within the cassette housing (101) and can be fed out of the cassette housing (101) and return into the cassette housing (101) through an opening (110) in the cassette housing (101), for moulding the at least one undercut in thermoplastically mouldable wall material of a PET container, and
- at least one fluid cylinder (103) arranged within the cassette housing (101) and mechanically coupled to the at least one moulding element (102),
wherein the at least one moulding element (102) can be at least partially fed out of the cassette housing (101) and returned into the cassette housing by the fluid cylinder (103),
wherein the cassette (100) comprises two shaping elements (102) and two fluid cylinders (103), each fluid cylinder (103) being mechanically connected to only one associated shaping element (102) in each case, **characterised in that**
the two fluid cylinders (103) are arranged with their longitudinal axes at an angle to the respective associated moulding element (102) and with their longitudinal axes crossing each other.

2. Cassette (100) according to claim 1, wherein the cassette (100) has at least one opening (116, 117) directed towards the wall of the blow moulding part (2, 3) in the installation situation for connecting a fluid line for fluidic actuation of the at least one fluid cylinder (103).

3. Cassette (100) according to claim 1 or 2, wherein the cassette (100) is dimensioned such that, in the installation situation with the cassette housing (101), it does not protrude beyond the outer surface (8) of the wall (5) of the blow moulding part (2, 3).

4. Cassette (100) according to one of the preceding claims, wherein the fluid cylinder (103) is a pneumatic cylinder and the at least one moulding element (102) can be pneumatically advanced and retracted.

5. Cassette (100) according to one of the preceding claims, wherein the cassette housing (101) comprises a rear base part (113) and a front part (112) projecting with respect to the base part (113), the front part (112) or a region thereof has an outer contour, which is complementary to the contour of at least one part of the handle mount, and the front part (112) has at least one opening (111) through which the at least one moulding element (102) can be fed forwards out of the cassette housing (101) and returned into the cassette housing (101).

6. Cassette (100) according to one of the preceding claims, wherein the two moulding elements (102) can each be fed out of the cassette housing (101) and returned into the cassette housing (101) in different, preferably opposite, directions.

7. Cassette (100) according to one of the preceding claims, wherein the fluid cylinders (103) each have a rear wall for connection to a fluid line, wherein the rear wall has an angle between 90° and 0°, preferably between 80° and 10°, more preferably between 70° and 20°, more preferably between 60° and 30°, more preferably between 50° and 40°, most preferably of 45° .

8. Blow mould (1) for stretch blow moulding a PET container with a handle mount for a handle which can be clipped in after stretch blow moulding, wherein the handle mount comprises at least one undercut in the PET container for receiving a complementary handle element, comprising
a) at least two blow moulding parts (2, 3) which, when placed against one another, form a cavity (4) which has the outer shape of the PET container to be moulded, the wall (5) of at least one of the two blow-moulded parts (2, 3) having an opening (6), and
b) a cassette (100) which is detachably arranged in the opening (6) and closes the opening (6), according to one of the preceding claims.

9. Blow mould (1) according to claim 8, wherein the cassette (100) does not project in the direction facing away from the cavity (4) with respect to the outer surface (8) of the wall (5) of the blow moulding part (2, 3).

10. Blow mould (1) according to claim 8 or 9, wherein the at least one fluid cylinder (103) is connected to a fluid line inside the wall of the blow moulding part (2, 3).

11. Blow mould (1) according to one of claims 8 to 10, wherein the cassette (100) protrudes with a front part (112) into the cavity (4) and at least one opening (111) to the cavity (4) is present in the front part (112), through which the at least one moulding element (102) can be advanced and returned in the direction of the cavity (4).

12. Method for stretch blow moulding a PET container with a handle mount for a handle which can be clipped in after the stretch blow moulding, wherein the handle mount comprises at least one undercut in the PET container for receiving a complementary handle element, comprising the steps of a) introducing a preheated preform made of thermoplastic material into a blow mould (1) according to one of claims 8 to 11 and b) stretch blow moulding the preform while forming the undercuts by the cassette (100).

13. Use of a blow mould (1) according to one of claims 8 to 11 or a cassette according to one of claims 1 to 7 for producing a PET container with a handle mount for a clip-in handle.

## Revendications

1. Cassette (100) destinée à être insérée dans une ouverture (6) d'une paroi (5) d'une pièce moulée par soufflage (2, 3) d'un moule de soufflage (1) pour le moulage par étirage-soufflage d'un récipient en PET avec un support de préhension pour une préhension pouvant être clipsée après le moulage par étirage-soufflage, dans laquelle le support de préhension comprend au moins une contre-dépouille dans le récipient en PET pour recevoir un élément de préhension de forme complémentaire, et dans laquelle la cassette (100) comprend :
- un boîtier de cassette (101)
- au moins un élément de moulage (102) disposé à l'intérieur du boîtier de cassette (101) et pouvant être avancé hors du boîtier de cassette (101) et ramené dans le boîtier de cassette (101) à travers une ouverture (110) dans le boîtier de cassette (101) pour le moulage de la au moins une contre-dépouille dans un matériau de paroi thermoplastique déformable d'un récipient en PET, et
- au moins un cylindre à fluide (103) disposé à l'intérieur du boîtier de cassette (101) et couplé mécaniquement à l'au moins un élément de formage (102),
le au moins un élément de formage (102) pouvant être avancé au moins partiellement hors du boîtier de cassette (101) et ramené dans le boîtier de cassette au moyen du cylindre à fluide (103),
la cassette (100) comprenant deux éléments de formage (102) et deux cylindres à fluide (103), chaque cylindre à fluide (103) étant relié mécaniquement à un seul élément de formage (102) associé, **caractérisé en ce que**
les deux cylindres de fluide (103) sont disposés avec leurs axes longitudinaux à un angle par rapport à l'élément de formage (102) respectivement associé et avec leurs axes longitudinaux croisés l'un par rapport à l'autre.

2. Cassette (100) selon la revendication 1, la cassette (100) présentant au moins une ouverture (116, 117) orientée vers la paroi de la pièce moulée par soufflage (2, 3) dans la situation de montage pour le raccordement d'une conduite de fluide pour l'actionnement fluidique du au moins un cylindre à fluide (103).

3. Cassette (100) selon la revendication 1 ou 2, la cassette (100) étant dimensionnée de manière à ne pas faire saillie au-delà de la surface extérieure (8) de la paroi (5) de la pièce moulée par soufflage (2, 3) en situation de montage avec le boîtier de cassette (101).

4. Cassette (100) selon l'une des revendications précédentes, dans laquelle le cylindre à fluide (103) est un cylindre pneumatique et l'au moins un élément de moulage (102) peut être avancé et ramené pneumatiquement.

5. Cassette (100) selon l'une quelconque des revendications précédentes, dans laquelle le boîtier de cassette (101) comprend une partie de base arrière (113) et une partie avant (112) en saillie par rapport à la partie de base (113), la partie avant (112) ou une zone de celle-ci présentant un contour extérieur, qui est complémentaire au contour d'au moins une partie du support de préhension, et la partie avant (112) présente au moins une ouverture (111) à travers laquelle le au moins un élément de moulage (102) peut être avancé hors du boîtier de cassette (101) et ramené dans le boîtier de cassette (101).

6. Cassette (100) selon l'une quelconque des revendications précédentes, dans laquelle les deux éléments de moulage (102) peuvent être respectivement avancés hors du boîtier de cassette (101) et ramenés dans le boîtier de cassette (101) dans des directions différentes, de préférence opposées.

7. Cassette (100) selon l'une quelconque des revendications précédentes, dans laquelle les cylindres fluidiques (103) comportent chacun une paroi arrière destinée à être raccordée à un conduit fluidique, la paroi arrière présentant un angle compris entre 90° et 0°, de préférence entre 80° et 10°, de préférence encore entre 70° et 20°, de préférence encore entre 60° et 30°, de préférence encore entre 50° et 40°, de préférence encore de 45°.

8. Moule de soufflage (1) pour le moulage par étirage-soufflage d'un récipient en PET avec support de préhension pour une préhension pouvant être clipsée après le moulage par étirage-soufflage, le support de préhension comprenant au moins une contre-dépouille dans le récipient en PET pour recevoir un élément de préhension de forme complémentaire, comprenant
a) au moins deux pièces moulées par soufflage (2, 3) qui, placées l'une contre l'autre, forment un espace creux (4) qui présente la forme extérieure du récipient en PET à mouler, la paroi (5) d'au moins l'une des deux pièces moulées par soufflage (2, 3) présentant une ouverture (6), et
b) une cassette (100) selon l'une des revendications précédentes, disposée de manière amovible dans l'ouverture (6) et fermant l'ouverture (6).

9. Moule de soufflage (1) selon la revendication 8, dans lequel la cassette (100) ne fait pas saillie par rapport à la surface extérieure (8) de la paroi (5) de la pièce moulée par soufflage (2, 3) dans la direction opposée à la cavité (4).

10. Moule de soufflage (1) selon la revendication 8 ou 9, dans lequel ledit au moins un cylindre de fluide (103) est raccordé à un conduit de fluide à l'intérieur de la paroi de la partie de moule de soufflage (2, 3).

11. Moule de soufflage (1) selon l'une des revendications 8 à 10, dans lequel la cassette (100) fait saillie dans la cavité (4) par une partie avant (112) et dans la partie avant (112) est prévue au moins une ouverture (111) vers la cavité (4), à travers laquelle le au moins un élément de formage (102) peut être avancé et ramené en direction de la cavité (4).

12. Procédé de moulage par étirage-soufflage d'un récipient en PET avec support de préhension pour une préhension pouvant être clipsée après le moulage par étirage-soufflage, le support de préhension comprenant au moins une contre-dépouille dans le récipient en PET pour recevoir un élément de préhension de forme complémentaire, comprenant les étapes consistant à a) introduire une préforme préchauffée en matière thermoplastique dans un moule de soufflage (1) selon l'une quelconque des revendications 8 à 11 et b) souffler par étirage la préforme en formant les contre-dépouilles au moyen de la cassette (100).

13. Utilisation d'un moule de soufflage (1) selon l'une des revendications 8 à 11 ou d'une cassette selon l'une des revendications 1 à 7 pour la fabrication d'un récipient en PET avec support de préhension pour une préhension clipsable.
